(19) Europäisches Patentamt European Patent Office Office européen des brevets

(11) **EP 2 115 299 B1**

(12) **EUROPEAN PATENT SPECIFICATION**

(45) Date of publication and mention
of the grant of the patent:
**16.03.2011 Bulletin 2011/11**

(21) Application number: **07734948.8**

(22) Date of filing: **18.06.2007**

(51) Int Cl.:
*F03D 7/02* (2006.01)     *F03D 11/04* (2006.01)

(86) International application number:
**PCT/IB2007/001875**

(87) International publication number:
**WO 2008/081232 (10.07.2008 Gazette 2008/28)**

(54) **WIND TURBINE DAMPING OF TOWER RESONANT MOTION AND SYMMETRIC BLADE MOTION USING ESTIMATION METHODS**

WINDTURBINENDÄMPFUNG EINER TURMRESONANZBEWEGUNG UND SYMMETRISCHEN SCHAUFELBEWEGUNG UNTER VERWENDUNG VON SCHÄTZUNGSVERFAHREN

AMORTISSEMENT DU MOUVEMENT DE RÉSONANCE DE LA TOUR ET DU MOUVEMENT SYMÉTRIQUE DE PALES D'UNE ÉOLIENNE UTILISANT DES PROCÉDÉS D'ESTIMATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.12.2006 US 878042 P**

(43) Date of publication of application:
**11.11.2009 Bulletin 2009/46**

(73) Proprietor: **Clipper Windpower, Inc.
Carpinteria CA 93013 (US)**

(72) Inventor: **WILSON, Kitchener Clark
Santa Barbara, CA 93109 (US)**

(74) Representative: **Zenz
Patent- und Rechtsanwälte
Rüttenscheider Strasse 2
45128 Essen (DE)**

(56) References cited:
EP-A- 1 719 910     EP-A- 1 816 347
WO-A-2007/053031     WO-A-2007/089136
US-A- 4 435 647

• VAN DER HOOFT E L ET AL: "Wind turbine control algorithms" ECN LITERATURE REVIEW, XX, XX, vol. ECN-C-3-111, December 2003 (2003-12), pages 1-89, XP003008410

**Description**

## BACKGROUND OF THE INVENTION

The invention relates to tower structures, such as wind turbine towers and more particularly to damping the turbine primary resonant frequencies by modulating the blade pitch angle while maintaining rated torque or power.

## DESCRIPTION OF THE PRIOR ART

Large modern wind turbines have rotor diameters of up to 100 meters with towers of a height to accommodate them. In the US tall towers are being considered for some places, such as the American Great Plains, to take advantage of estimates that doubling tower height will increase the wind power available by 45%.

Various techniques are in use, or proposed for use, to control a wind turbine. The goal of these control methodologies is to maximize electrical power generation while minimizing the mechanical loads imposed on the various turbine components. Loads cause stress and strain and are the source of fatigue failures that shorten the lifespan of components. Reducing loads allows the use of lighter or smaller components, an important consideration given the increasing sizes of wind turbines. Reducing loads also allows the use of the same components in higher power turbines to handle the increased wind energy or allows an increase in rotor diameter for the same rated power.

Wind turbines, and the towers that support them, have complex dynamics influenced by the wind activity as well as control inputs. The dynamics include rotor rpm, lightly damped tower motion, lightly damped drive train motion, flexible blade bending, etc. Wind turbine control is a balancing act between providing good control of the turbine rpm, adding tower motion damping, and adding drive train damping while minimizing or not exacerbating blade bending. State space control, with complex models of all these dynamics, hold promise to accomplish this, but such controls are complex and difficult to develop.

It is desirable to provide a control method that adds tower damping by modulating the rpm control pitch commands generated by conventional control methods (e.g. proportional-integral-PI compensators). Such a method is adaptable to inclusion in state space control algorithms as well as used as an adjunct to conventional controls.

Approaches to damping, for example tower damping, generally consist of measuring tower acceleration, detecting the natural tower resonant mode within that acceleration, and generating a feedback blade pitch that adds damping. US patents 4,420,692 and 4,435,647 disclose the use of conventional band-pass filters applied to damp the tower first bending moment through use of blade pitch control. This type of damping in many situations increases blade bending motion, which is unacceptable

The acceleration signal has superimposed onto the natural tower resonant motion, among others, an acceleration due to the three-per-revolution (3P) force caused by imbalances and blade aerodynamic nonlinearities. Not eliminating some of these components from the pitch-feedback-damping signal can aggravate blade motion and lead to blade fatigue and failure. In particular, the 3P signal picked up by the tower accelerometer 144 used for damping is very close to the tower resonant frequency and within the pass-band of the band-pass filters disclosed in patents 4,420,692 and 4,435,647. Using the band-pass filters results in the 3P signals being passed through to the blade pitch control with an arbitrary phase. The source of the 3P signal is the blade symmetric bending mode where all three rotor blades move together, bending in and out of the blade rotor disc plane. The 3P frequency component is close to the blade symmetric bending mode resonant frequency and, when passed through with phase changes caused by the band-pass filter, exacerbates the symmetric blade bending.

It is therefore desirable to provide a means to separate the tower resonant motion from that caused by 3P blade imbalance. Conventional approaches to eliminating a frequency component consist of placing a notch filter in series with the conventional band-pass filter. The 3P notch, being close in frequency to the band-pass, adds its phase and gain error to the final output making control difficult. This process does not produce estimates of the tower resonant motion and of the 3P motion.

It is desirable to provide estimates of the motion of the tower at its known resonant frequency using tower acceleration measurements alone. Such estimates, uncorrupted by other motions, are needed to generate pitch feedback signals for tower resonant motion damping.

It is also desirable to provide estimates of the 3P acceleration caused by the rotation of the three unbalanced blades. Such estimates uncorrupted by tower resonant motion and having selected phase so as not to exacerbate blade bending, are needed for tower and blade damping and general turbine control.

## SUMMARY OF THE INVENTION

Briefly, the present invention relates to an apparatus according to claim 1 and a method according to claim 6 of controlling a wind turbine having a number of rotor blades comprising a method of using tower acceleration measurements to damp tower resonant motion, and to damp 3P motion and hence blade symmetric bending. The tower resonant acceleration is caused by the collective response of the tower and blades to the wind changes averaged over the entire blade disc. With three unbalanced blades rotating in a wind shear (vertical, horizontal or due to yaw misalignment), the interaction of the air stream with the blades is a thrice per revolution motion superimposed on the resonant motion. The resulting overall tower acceleration includes the lightly damped resonant motion of the tower structure with superimposed thrice per revolution activity. This tower motion causes fatigue failure and shortens the tower life.

Further, the blades themselves are elongated flexible structures having their own bending modes and resonant motion. As the pitch commands are actuated on these blades by turning them to and from a feather position, the blade bending is strongly influenced. If the pitch commands include a frequency component near the blade symmetric bending resonant frequency, the pitch activity can exacerbate blade bending and increase blade loading and shorten their life.

The invention provides for an apparatus that damps at least one unwanted motion frequency component in a wind turbine tower. A pitch command logic develops a rotor blade pitch command signal. A tower damping logic uses tower acceleration measurements to estimate said at least one motion frequency component using a model based estimator.

The tower damping logic outputs a collective pitch modulation based on said at least one component estimate. A combining logic connected to said tower damping logic and to said pitch command logic generates an output being a combined blade pitch command capable of commanding pitch of the rotor blades, which includes damping of said at least one wind turbine tower motion frequency component.

In accordance with an aspect of the invention, the wind turbine uses feedback pitch commands to control pitch of the blades in order to control the rpm of the rotor and the power generated by the turbine. The present invention adds, to this rpm controlling feedback pitch, a feedback component to damp the tower resonant motion that does not include frequencies that exacerbate blade bending. This tower resonant motion damping feedback pitch component is applied collectively (equally to each blade).

In accordance with an aspect of the invention, the present invention further adds a feedback pitch component that reduces the 3P tower motion and, therefore, blade bending. This 3P motion damping feedback pitch component is also applied collectively.

In accordance with an aspect of the invention, in order to damp the tower motion, the turbine control includes a means to estimate the tower resonant motion and simultaneously estimate the tower 3P motion. The control further produces a tower damping pitch feedback signal and a 3P damping pitch feedback pitch signal.

In accordance with an aspect of the invention, this is accomplished by an estimator using only the tower acceleration measurements and tuned to specifically estimate the tower resonant acceleration and simultaneously estimate the 3P tower acceleration. The resonant tower damping pitch feedback signal is formed from the estimated tower resonant acceleration rate, and the 3P pitch feedback signal is formed from the estimated 3P tower acceleration rate.

Further, to correct for pitch actuator and other turbine system lags, each feedback signal is provided with individual phase control to advance or retard each as needed. The 3P pitch feedback signal does not exacerbate the blade symmetric bending mode as its phase is set to mitigate this mode.

Further, to account for varying wind conditions, each feedback signal is provided with a gain that adapts to the condition.

The feedback signals are formed as modulations of the nominal pitch signals developed by the tower controls (state space, Proportional-Integral-Derivative-PID, ...) for rpm or other purposes. The final pitch command to the pitch actuator is the sum of the nominal, the resonant tower damping pitch modulation, and the 3P pitch feedback modulation.

In accordance with an aspect of the invention, acceleration caused by the 3P motion of the imbalanced blades is rejected in the tower resonant pitch feedback signal.

In accordance with an aspect of the invention, acceleration caused by the resonant motion of the tower is rejected in the 3P pitch feedback signal.

The invention has the advantage that it rids the tower resonant motion pitch control signal of 3P (or any other selected frequency) signal while passing the tower first bending frequency (or any other selected frequency). Further it rids the 3P pitch control signal of tower resonant motion (or any other selected frequency) signal while passing the 3P frequency (or any other selected frequency). Further it provides feedback pitch signals to mitigate the tower resonant motion and the 3P motion.

This holds true even when such frequencies are too close to use conventional frequency filters.

Further, according to the in method of using tower acceleration measurements to damp tower resonance motion is provided. This method also suppresses unwanted signals in the measurements, in a wind turbine tower which uses a pitch command to control pitch of rotor blades of said wind turbine.

According to the in vention the method comprises the steps of:

measuring tower acceleration;
estimating the tower resonant acceleration and the unwanted acceleration using the acceleration measurements with a model based estimator;
providing a blade pitch resonant modulation to damp tower motion using said tower resonant acceleration estimates;
combining said blade pitch resonant modulation with said pitch command resulting in a combined pitch command; and
using said combined pitch command to control pitch of the rotor blades in order to damp said wind turbine tower resonant motion while suppressing the unwanted motion.

Further, a method of introducing desired phase to compensate for actuator lags is included.

Further, a method of gain adaptation to wind conditions is included. This is a very general and relatively simple technique that can be used to detect one frequency signal when another is close by and can be used advantageously for many purposes other than tower motion damping.

## BRIEF DESCRIPTION OF THE DRAWINGS

The invention and its mode of operation will be more fully understood from the following detailed description when taken with the appended drawings in which:

**FIGURE 1** is a block diagram of a variable speed wind turbine in accordance with the present invention highlighting the key turbine elements.

**FIGURE 2** is a block diagram of a tower damping system in accordance with the present invention.

**FIGURE 3** is a graphical display of the transfer function of the estimated tower resonant rate of acceleration driven by the tower-measured acceleration before parameter selection.

**FIGURE 4** is a graphical display of the transfer function of the estimated tower resonant rate of acceleration driven by the tower-measured acceleration after parameter selection.

**FIGURE 5** is a graphical display of a sample rate of acceleration sensitivity to the steady state pitch where the pitch is a stand-in for wind speed.

**FIGURE 6** is a graphical display of the transfer function of the pitch modulation to compensate for tower resonant acceleration driven by the tower measured acceleration after parameter selection and provision of adaptive gain (at wind speed of 14 m/s or 10.77 degree pitch).

**FIGURE 7** is a graphical display of the transfer function of the pitch modulation to compensate for tower resonant acceleration driven by the tower-measured acceleration after parameter selection and provision of adaptive gain (at wind speed of 14 m/s or 10.77 degree pitch) and addition of 30 degree phase lead.

**FIGURE 8** is a graphical display of the transfer function of a conventional band-pass and notch filter replication of **FIGURE 4** to illustrate the phase error introduced.

**FIGURE 9** is a graphical display of the transfer function of the estimated 3P rate of acceleration driven by the tower-measured acceleration after parameter selection.

**FIGURE 10** is a graphical display of the transfer function of the -30 degree phase shifted estimated 3P rate of acceleration driven by the tower-measured acceleration after parameter selection.

## DETAILED DESCRIPTION OF THE INVENTION

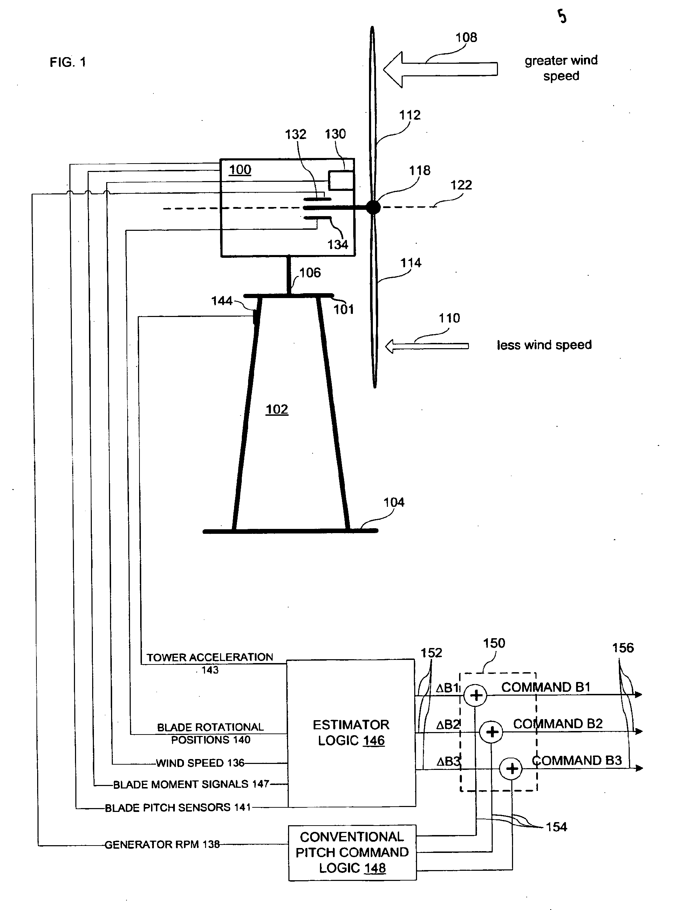

Refer to **FIGURE 1,** which is a block diagram of a variable-speed wind turbine apparatus in accordance with the present invention. The wind-power generating device includes a turbine with one or more electric generators housed in a nacelle 100, which is mounted atop a tall tower structure 102 anchored to the ground 104. The nacelle 100 rests on a yaw platform 101 and is free to rotate in the horizontal plane about a yaw pivot 106 and is maintained in the path of prevailing wind current.

The turbine has a rotor with variable pitch blades, 112, 114, attached to a rotor hub 118. The blades rotate in response to wind current. Each of the blades may have a blade base section and a blade extension section such that the rotor is variable in length to provide a variable diameter rotor. As described in US patent 6,726,439, the rotor diameter may be controlled to fully extend the rotor at low flow velocity and to retract the rotor, as flow velocity increases such that the loads delivered by or exerted upon the rotor do not exceed set limits. The nacelle 100 is held on the tower structure in the path of the wind current such that the nacelle is held in place horizontally in approximate alignment with the wind current. The electric generator is driven by the turbine to produce electricity and is connected to power carrying cables inter-connecting to other units and/or to a power grid.

The apparatus shown in **FIGURE 1** controls the RPM of a wind turbine and damps the tower resonant motion and 3P motion. The pitch of the blades is controlled in a conventional manner by a command component, conventional pitch command logic 148, which uses generator RPM 138 to develop a nominal rotor blade pitch command signal 154. Damping logic 146 connected to the tower acceleration signal 143 generates an estimated blade pitch modulation command 152. Combining logic 150 connected to the estimated blade pitch modulation command 152 and to the pitch command 154 provides a combined blade pitch command 156 capable of commanding pitch of the rotor blades, which combined blade pitch command includes damping of the wind turbine tower resonant motion and of the 3P blade imbalance motion.

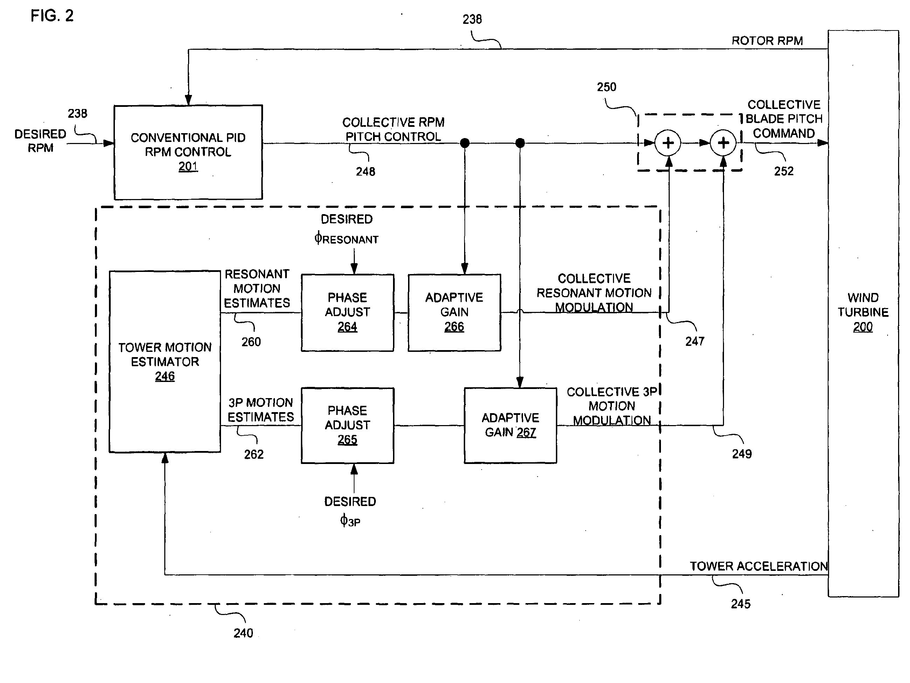

The apparatus shown in **FIGURE 2** compensates for tower resonance and blade imbalance in a wind turbine 200. The nominal pitch of the blades is controlled in a conventional manner 201 by a command component 248, which uses actual generator RPM 238 to develop the rotor blade pitch command signal.

The modulation of the pitch of the blades is controlled by tower-damping logic 240. The result is a collective resonant motion modulation 247 and a collective 3P motion modulation 249. Combining logic 250 connected to the blade pitch modulation commands 247 and 249 and to the collective pitch command 248, provides a combined blade pitch command 252 capable of commanding pitch of the rotor blades, which includes damping of the wind turbine tower and of the blades.

The tower damping logic 240 comprises a tower motion estimator 246 using tower acceleration measurements 245 to estimate the tower resonant motion 260 and the tower 3P motion 262. The resonant motion estimates 260 are phase-adjusted 264 and amplified by an adaptive gain 266 using the collective RPM command component 248 to select the appropriate gain. The 3P motion estimates 262 are phase-adjusted 265 and amplified by an adaptive gain 267 using the collective RPM command component 248 to select the appropriate gain.

The Estimator: The tower resonant estimator logic is based on a second order damped model of the tower resonant motion:

$$a_{resonant} = -\omega_{resonant}^2 x_{resonant} - 2\omega_{resonant}\xi_{resonant} v_{resonant}$$

wherein a is acceleration (m/s/s), v is velocity (m/s), x is position (m), and $\xi_{resonant}$ is the damping coefficient of the estimator tower resonant response (not necessarily of the tower dynamics) used to tune its response, and $\omega_{resonant}$ is the known resonant frequency of that motion. Taking two derivatives with respect to time, this model is written in terms of acceleration alone as

$$\ddot{a}_{resonant} = -\omega_{resonant} a_{resonant} - 2\omega_{resonant}\xi_{resonant}\dot{a}_{resonant} + \delta_{resonant}$$

The added $\delta_{resonant}$ term (m/s/s/s/s) is a stochastic noise quantity representing inaccuracies in the model and its standard deviation $\sigma$ is used to further tune the estimator response.

The estimator is further based on a second order damped model of the 3P wind shear motion

$$\ddot{a}_{3P} = -\omega_{3P}^2 a_{3P} - 2\omega_{3P}\xi_{3P}\dot{a}_{3P} + \delta_{3P}$$

wherein $\xi_{3P}$ and $\delta_{3P}$ are similarly used to tune the estimator response.

The estimator uses the measurement equation relating these two accelerations to the measured acceleration

$$a_{measured} = a_{resonant} + a_{3P} + \delta_{measurement}$$

wherein the added $\delta_{measurement}$ term (m/s/s) represents stochastic measurement deviations beyond that modeled and is also used to tune the estimator response. The state space representation of the complete system is

$$\frac{d}{dt}\begin{bmatrix} a_{resonant} \\ \dot{a}_{resonant} \\ a_{3P} \\ \dot{a}_{3P} \end{bmatrix} = \begin{bmatrix} 0 & 1 & 0 & 0 \\ -\omega_{resonant}^2 & -2\xi_{resonant}\omega_{resonant} & 0 & 0 \\ 0 & 0 & 0 & 1 \\ 0 & 0 & -\omega_{3P}^2 & -2\xi_{3P}\omega_{3P} \end{bmatrix}\begin{bmatrix} a_{resonant} \\ \dot{a}_{resonant} \\ a_{3P} \\ \dot{a}_{3P} \end{bmatrix} + \begin{bmatrix} 0 & 0 \\ 1 & 0 \\ 0 & 0 \\ 0 & 1 \end{bmatrix}\begin{bmatrix} \delta_{resonant} \\ \delta_{3P} \end{bmatrix}$$

$$a_{measured} = \begin{bmatrix} 1 & 0 & 1 & 0 \end{bmatrix}\begin{bmatrix} a_{resonant} \\ \dot{a}_{resonant} \\ a_{3P} \\ \dot{a}_{3P} \end{bmatrix} + \delta_{measurement}$$

If the acceleration signal has a bias that may change slowly with time, it is handled by high-pass filtering the signal (at around 0.01 Hz) before feeding it to the estimator, or including a bias estimation component within the estimator.

Any number of numerical and explicit means are available to convert this to a discrete time model and from there to a discrete time estimator (e.g. Kalman filter, $H_\infty$, pole placement, ...) generally having the form

$$\underline{x}_{i+1/i} = \underline{A}\underline{x}_{i/i}$$
$$\underline{x}_{i+1/i+1} = \underline{x}_{i+1/i} + \underline{k}(a^*_{measurement.i} - \underline{c}\underline{x}_{i+1/i})$$
$$= \underline{A}\underline{x}_{i/i} + \underline{k}(a^*_{measurement.i} - \underline{c}\underline{A}\underline{x}_{i/i})$$
$$= (\underline{I} - \underline{k}\underline{c})\underline{A}\underline{x}_{i/i} + \underline{k}a^*_{measurement.i}$$
$$= \underline{\Gamma}\underline{x}_{i/i} + \underline{k}a^*_{measurement.i}$$

wherein $\underline{k}$ is the estimator gain matrix and $a^*_{measurement.i}$ is the actual acceleration measurement at time $t_i$. The gain can vary with each estimate (as in the classical Kalman or $H_\infty$ filters) or can be selected as a constant matrix (as in pole placement and the steady state Kalman or $H_\infty$ gains). Time varying gains have the advantage of adapting to changing resonant and wind shear $\omega$ and $\xi$, while constant gains have the advantage of forming a very simple and computationally efficient filter.

The two stages of the estimator, the resonant and the 3P, are formed together within the same observer. This means the design process (gain selection) produces an observer that 'knows' both phenomena exist and their interactions. And, because this is an estimator and thus cannot allow phase errors, the estimates have minimal phase error (generally zero error unless the frequency bandwidths substantially overlap). Further, since the both phenomena are estimated, each is free of the other.

Feedback for Tower Resonant Damping: A damping feedback term is developed to add damping to the tower resonant portion of the dynamics. A more complete model of the resonant dynamics, one that includes the affect of blade pitch and wind speed, is

$$\ddot{a}_{resonant} = -\omega_{resonant}^2 a_{resonant} - 2\omega_{resonant}\xi_{inherent}\dot{a}_{resonant} + f_{resonant}(\beta, V_{wind}) + ...$$

wherein $\xi_{inherent}$ is the inherent or existing natural damping, and $f_{resonant}(\beta, V_{wind})$ is a forcing function representing the influence of blade pitch β and wind speed $V_{wind}$ through the blade aerodynamics. If damping is added by modulating pitch, then approximately

$$\ddot{a}_{resonant} = -\omega_{resonant}^2 a_{resonant} - 2\omega_{resonant}(\xi_{inherent} + \xi_{xtra})\dot{a}_{resonant} + f_{resonant}(\beta, V_{wind}) + g_{resonant}(V_{wind})\Delta\beta_{resonant} + ...$$

wherein $\xi_{xtra}$ is the desired extra damping coefficient produced by the imposed $\Delta\beta_{resonant}$ modulation. The $g_{resonent}$ ($V_{wind}$) gain factor as determined from simulation studies of the turbine. Equating terms, the extra damping is provided by the modulation when the pitch modulation is scheduled by wind speed as

$$\Delta\beta_{resonant} = -\frac{2\omega_{resonant}\xi_{xtra}}{g_{resonant}(V_{wind})}\dot{a}_{resonant}$$

Lacking wind speed values, $V_{wind}$ is replaced by pitch given by the steady state relation $V_{windSS} = h(\beta_{SS})$ between wind speed and pitch for the turbine:

$$\Delta\beta_{resonant} = -\frac{2\omega_{resonant}\xi_{xtra}}{g_{resonant}[h(\beta)]}\dot{a}_{resonant}$$

The feedback pitch is a modulation to the pitch demand normally produced by the turbine for its other control functions (e.g. rpm control using PID compensators). Since the feedback is based only on the resonant motion estimation, and this is free of 3P dynamics, the feedback has no undesired frequencies and does not exacerbate turbine blade modes.
<u>Phase Control:</u> It is one thing to demand a pitch and quite another to get a response. Pitch actuators and other processing requirements add lag between the demand and the actuation, and this can be corrected by adding lead to the demand modulation. Simplifying the estimator resonant dynamics by ignoring ξ damping terms:

$$\ddot{a}_{resonant} = -\omega_{resonant}^2 a_{resonant}$$

At steady state the complex exponential solution is

$$a_{resonant}(j\omega_{resonant}) = \lambda e^{j\omega_{resonant}t}$$

$$\dot{a}_{resonant}(j\omega_{resonant}) = j\omega_{resonant}\lambda e^{j\omega_{resonant}t}$$

If the phase shifted term is formed by a unity gain sum of $\dot{a}_{resonant}$ and $a_{resonant}$ as

$$\dot{a}_{resonant\_phaseShifted} = \frac{\gamma\omega_{resonant}a_{resonant} + \dot{a}_{resonant}}{\sqrt{1+\gamma^2}}$$

then using Euler's equation

$$\dot{a}_{resonant\_phaseShifted}(j\omega_{resonant}) = \dot{a}_{resonant}(j\omega_{resonant})\frac{1-\gamma j}{\sqrt{1+\gamma^2}}$$
$$= \dot{a}_{resonant}(j\omega_{resonant})e^{j\phi_{resonant}}$$
$$= \dot{a}_{resonant}(j\omega_{resonant})(\cos\phi_{resonant} + j\sin\phi_{resonant})$$

wherein $\phi_{resonant}$ is the desired phase shift (positive for lead). Equating real and imaginary terms,

$$\cos\phi = \frac{1}{\sqrt{1+\gamma^2}}$$
$$\sin\phi = -\frac{\gamma}{\sqrt{1+\gamma^2}}$$
$$\dot{a}_{resonant\_phaseShifted} = \frac{\dot{a}_{resonant} - (\omega_{resonant}\tan\phi_{resonant})a_{resonant}}{\sqrt{1+\tan^2\phi_{resonant}}}$$
$$= -(\omega_{resonant}\sin\phi_{resonant})a_{resonant} + (\cos\phi_{resonant})\dot{a}_{resonant}$$

The phase controlled pitch modulation is then given by

$$\Delta\beta_{resonant\_phaseShifted} = -\frac{2\omega_{resonant}\xi_{xtra}}{g_{resonant}[h(\beta)]}[-(\omega_{resonant}\sin\phi_{resonant})a_{resonant} + (\cos\phi_{resonant})\dot{a}_{resonant}]$$

Example of Tower Resonant Damping: Consider a turbine having tower resonance frequency of 0.38 Hz, blade bending moment close to the 3P frequency, and a 20 Hz control loop. At rated rpm (15.5 rpm) 3P is at 0.775 Hz and must be eliminated from the modulated pitch feedback so as not to exacerbate blade bending. Using preliminary values

| | |
|---|---|
| $\xi_{xtra}$ | = 0.707 |
| $\sigma_{\delta measurement}$ | =0.1 |
| $\phi$ | =0 |
| $\omega_{resonant}$ | = $2\pi(0.38)$ |
| $\omega_{resonant}$ | = $2\pi(0.775)$ |
| $\sigma_{\delta resonant}$ | =0.001 |
| $\xi_{resonant}$ | = 0 |
| $\sigma_{\delta 3P}$ | = 0.001 |
| $\xi_{3P}$ | =0 |

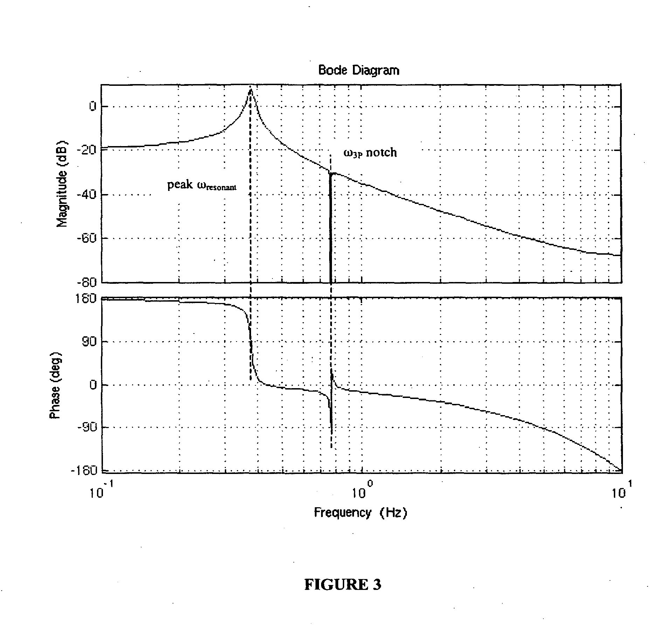

the state space model is digitized (using the Tustin, or bilinear, transform), the steady state Kalman gains are calculated, and the Bode plot (using zero-order-hold) of the acceleration measurement to $\dot{a}_{resonant}$, shown in **FIGURE 3**, has a peak at $\omega_{resonant}$ and a notch at $\omega_{3P}$.

Although a dynamic Kalman filter is useful to track the 3P frequency as the turbine changes rpm, here the steady state is considered as it is computationally simpler and has been shown to work well.

Increasing $\sigma_{\delta resonant}$ and $\sigma_{\delta 3P}$ to widen the bandwidth of the peak and notch, since the resonant and 3P frequencies are not that well known, and increasing $\xi_{resonant}$ and $\xi_{3P}$ to soften the response:

$$\sigma_{\delta resonant} = 0.016$$
$$\xi_{resonant} = 0.2$$
$$\sigma_{\delta 3P} = 0.06$$
$$\xi_{3P} = 0.04$$

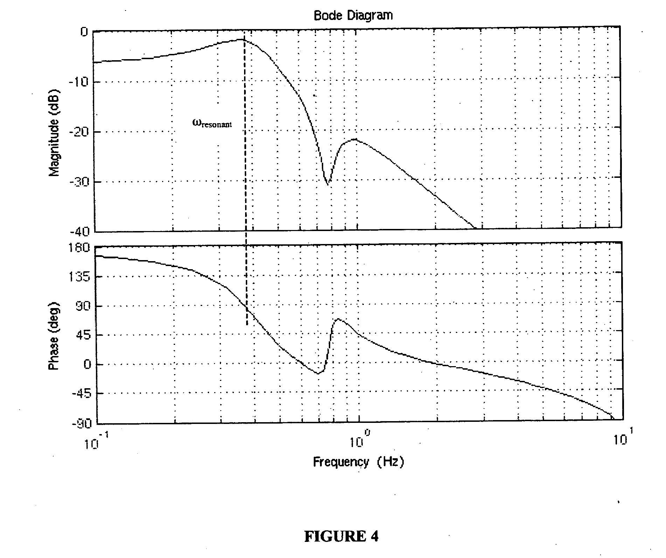

produces the Bode plot of **FIGURE 4.** Notice, in both **FIGURE 3** and **FIGURE 4,** that the phase of the resonant signal at $\omega_{damp}$ is +90 degrees as expected of a differentiator, and without error. The resulting estimator matrices are

$$\underline{\Gamma}_{ss} = \begin{bmatrix} 0.96833 & 0.047412 & -0.023486 & -0.0011803 \\ -0.30196 & 0.94372 & 0.0048336 & 0.00024292 \\ -0.090436 & -0.0044280 & 0.88257 & 0.044354 \\ -0.14511 & -0.0071052 & -1.2992 & 0.94492 \end{bmatrix}$$

$$\underline{k}_{ss} = \begin{bmatrix} 0.024186 \\ -0.0049776 \\ 0.091135 \\ 0.14624 \end{bmatrix}$$

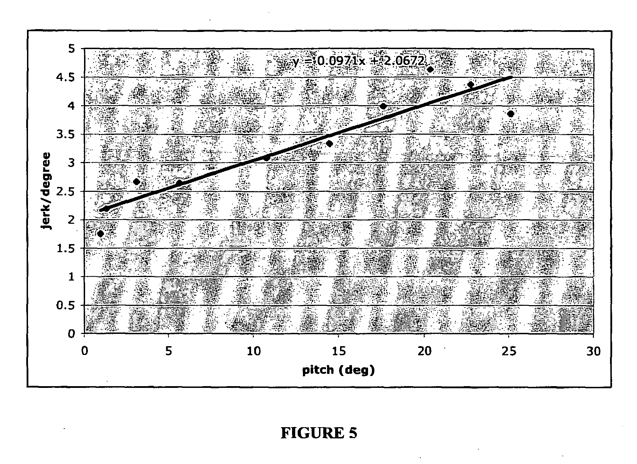

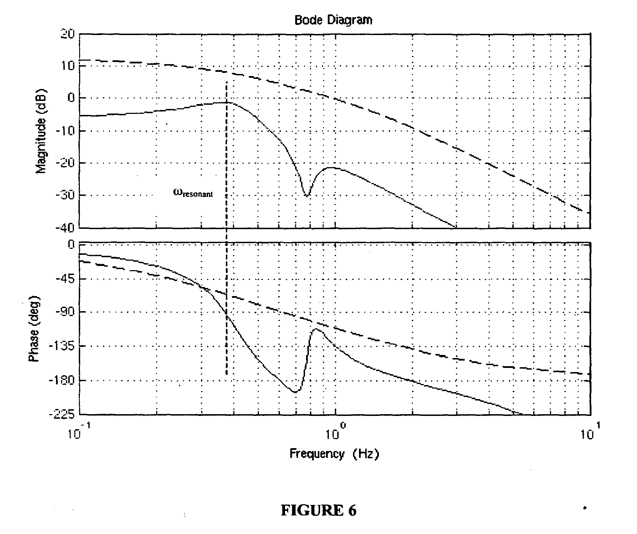

Simulation studies of the turbine produce $g_{resonant}[h(\beta)]$, the gain scheduling term, shown in **FIGURE 5,** with the resulting Bode plot of the pitch modulation of **FIGURE 6**. Also shown in **FIGURE 6** is the conventional band-pass compensator originally developed for this turbine (dashed lines). Whereas the original system exacerbated blade bending, the estimator does not and produces equivalent tower resonant damping.

To illustrate the phase shifting property, increasing

$$\phi = 30 \text{ degrees}$$

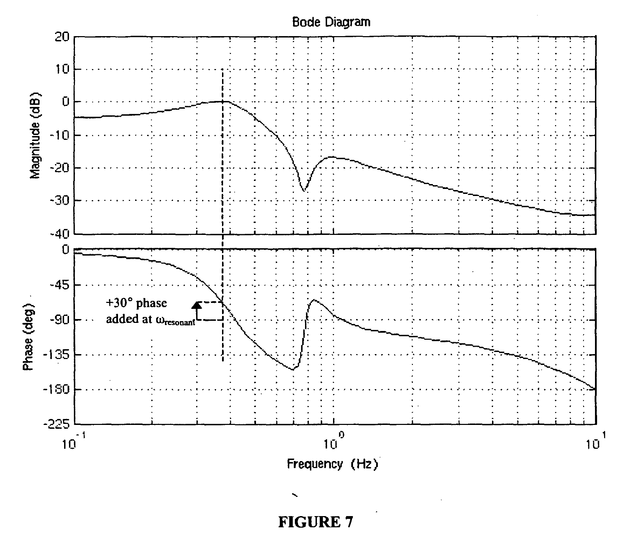

produces the Bode of **FIGURE 7** where the +30 degree phase shift at $\omega_{resonant}$ is seen when compared to **FIGURE 6.**

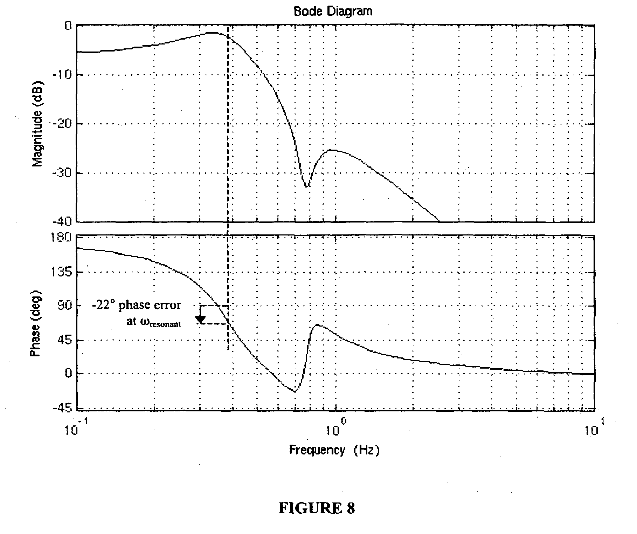

Attempts to produce the transfer function of **FIGURE 4** using conventional frequency filters is not successful. **FIGURE 8** is the result of using a low-pass followed by a notch filter:

$$lowPass(s) = g_{low} \frac{\omega_{resonant}^2}{s^2 + 2\xi_{low}s + \omega_{resonant}^2}$$

$$notch(s) = 1 - g_{notch} \frac{\omega_{3P}^2}{s^2 + 2\xi_{notch}s + \omega_{3P}^2}$$

with

$$g_{low} = -0.5$$
$$\xi_{low} = 0.3$$

(continued)

| | |
|---|---|
| $g_{notch}$ | = 0.85 |
| $\xi_{notch}$ | = 0.3 |

Although the magnitude plot is similar, the phase is not: there is an added 22 degree phase lag at $\omega_{resonant}$ in contrast to the estimator of **FIGURE 4.**

Feedback for Tower 3P Damping Plus Phase Control: Identically as for the resonant damping above, the 3P tower motion damping is given by

$$\dot{a}_{3P\_phaseShifted} = -(\omega_{3P}\sin\phi_{3P})a_{3P} + (\cos\phi_{3P})\dot{a}_{3P}$$

$$\Delta\beta_{3P\_phaseShifted} = -\frac{2\omega_{3P}\xi_{xtra}}{g_{3P}[h(\beta)]}\dot{a}_{3P3P\_phaseShifted}$$

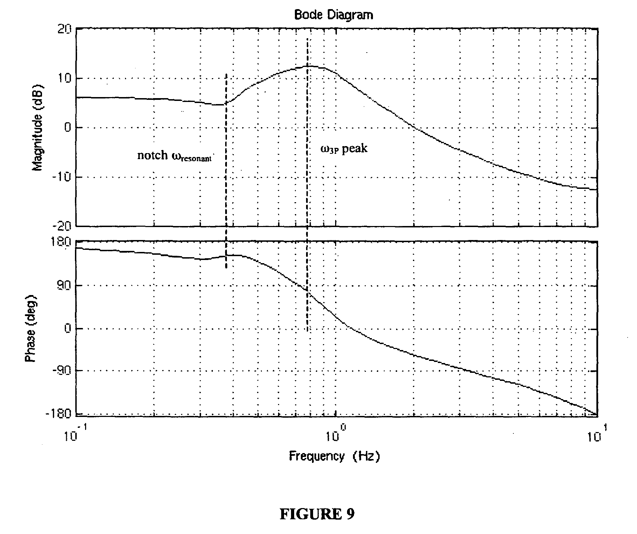

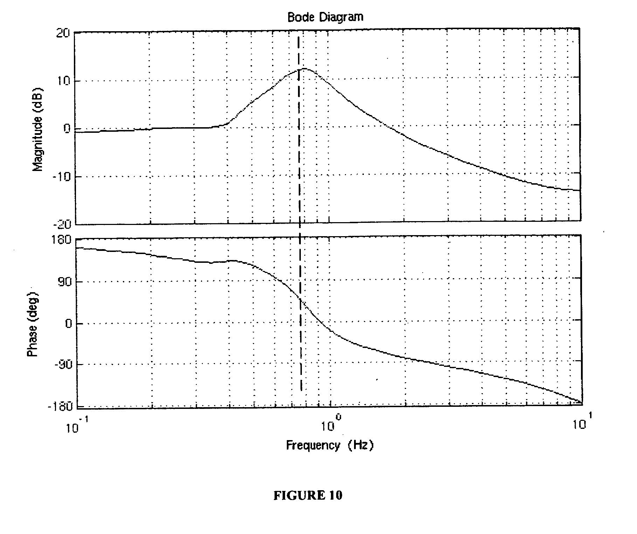

wherein the 3P acceleration terms are taken directly from the estimator values and $g_{3P}[h(\beta)]$ is determined from simulation studies. The transfer function from tower acceleration to $\dot{a}_{3P}$ is shown in **FIGURE 9:** there is a notch at $\omega_{resonant}$ and a peak at $\omega_{3P}$ with the anticipated +90 degree phase shift of a differentiator. The phase actually slightly less than 90 degrees due to lag introduced at $\omega_{3P}$ by the nature of zero-order-holds of sampled data systems (added lag = 0.775 Hz*360 degrees/20 Hz = 14 degrees). Phase control is important so as not to exacerbate blade bending while damping it. As seen in **FIGURE 6,** the conventional design that exacerbated blade bending produced a 3P feedback component having a phase of around -98 degrees. With the negative sign used on the feedback gain, the nominal estimator feedback is close at -90+14 = -76 degrees and needs to be adjusted to damp and not excite the blade bending mode. **FIGURE 10** illustrates the added 30 degree lag when $\phi_{3P}$ = -30 degrees.

**Claims**

**1.**   An apparatus that damps at least one unwanted motion frequency component in a wind turbine tower comprising:

pitch command logic developing a rotor blade pitch command signal;
tower damping logic using tower acceleration measurements to estimate said at least one motion frequency component using a model based estimator;
an output of said tower damping logic comprising a collective pitch modulation based on said at least one component estimate; and,
combining logic connected to said tower damping logic and to said pitch command logic, an output of said combining logic being a combined blade pitch command capable of commanding pitch of the rotor blades, which includes damping of said at least one wind turbine tower motion frequency component.

**2.**   The apparatus of Claim 1 wherein said collective pitch modulation includes one or more of tower resonant motion and an unwanted frequency motion.

**3.**   The apparatus of Claim 1 wherein said component estimates include one or more of resonant motion estimates and unwanted frequency motion estimates.

**4.**   The apparatus of Claim 1 wherein said model is a second order damped response.

**5.**   The apparatus of Claim 1 wherein the damping logic further phase shifts the collective pitch modulation based on said at least one frequency component estimate.

**6.**   A method of using tower acceleration measurements to damp tower resonance motion, while also suppressing unwanted signals in the measurements, in a wind turbine tower which uses a pitch command to control pitch of rotor blades of said wind turbine, comprising steps of:

A. measuring tower acceleration;
B. estimating the tower resonant acceleration and the unwanted acceleration using the acceleration measurements with a model based estimator;
C. providing a blade pitch resonant modulation to damp tower motion using said tower resonant acceleration estimates;
D. combining said blade pitch resonant modulation with said pitch command resulting in a combined pitch command; and
E. using said combined pitch command to control pitch of the rotor blades in

order to damp said wind turbine tower resonant motion while suppressing the unwanted motion.

7. The method of Claim 6 further comprising the steps of:

providing a blade pitch unwanted modulation to damp the unwanted motion using said unwanted acceleration estimates; and,
combining the blade pitch unwanted command to form the combined pitch command.

8. The method of Claim 6, wherein in step B a second order damped model is used to estimate the tower resonant and unwanted accelerations.

**Patentansprüche**

1. Ein Einrichtung, welche wenigstens eine unerwünschte Frequenzkomponente einer Bewegung eines Windturbinenturms dämpft, aufweisend:

Pitch-Befehlslogik, welche ein Pitch-Befehlssignal für ein Rotorblatt hervorbringt;
Turmdämpfungslogik, welche Turmbeschleunigungsmessungen verwendet, um die wenigstens eine Frequenzkomponente einer Bewegung unter Verwendung eines modellbasierten Abschätzers abzuschätzen;
eine Ausgabe der Turmdämpfungslogik, aufweisend eine kollektive Pitch-Modulation auf Grundlage der wenigstens einen Komponentenabschätzung; und
Kombinationslogik, die mit der Turmdämpfungslogik und der Pitch-Befehlslogik gekoppelt ist, wobei eine Ausgabe der Kombinationslogik eine kombinierte Blatt-Pitch-Anweisung ist, die den Pitch der Rotorblätter angibt, wobei diese eine Dämpfung der wenigstens einen Bewegungsfrequenzkomponente des Turbinenturms enthält.

2. Die Einrichtung nach Anspruch 1, wobei die kollektive Pitch-Modulation eine oder mehrere von Turm-Resonanzbewegungen enthält und eine unerwünschte Frequenzbewegung.

3. Die Einrichtung nach Anspruch 1, wobei die Komponentenabschätzungen eine oder mehrere von Abschätzungen von Resonanzbewegungen und Abschätzungen unerwünschter Frequenzbewegungen enthalten.

4. Die Einrichtung nach Anspruch 1, wobei das Modell ein Modell mit gedämpfter Antwort zweiter Ordnung (second order damped response) ist.

5. Die Einrichtung nach Anspruch 1, wobei die Dämpfungslogik außerdem die kollektive Pitch-Modulation phasenverschiebt, auf Grundlage der wenigstens einen Frequenzkomponentenabschätzung.

6. Ein Verfahren zur Verwendung von
Turmbeschleunigungsmessungen zum Dämpfen von resonanten Turmbewegungen, während gleichzeitig unerwünschte Signale in den Messungen unterdrückt werden, in einem Windturbinenturm, welcher einen Pitch-Befehl zur Steuerung des Pitchens von Rotorblättern der Windturbine verwendet, umfassend die Schritte:

a) Messen der Turmbeschleunigung;
b) Abschätzen der resonanten Turmbeschleunigung und der unerwünschten Beschleunigung unter Verwendung der Beschleunigungsmessungen mit einem modellbasierten Abschätzer;
c) Bereitstellen einer Blatt-Pitch-Resonanzmodulation zur Dämpfung der Turmbewegung und Verwendung der Resonanzbeschleunigungsabschätzungen des Turms;

d) Kombinieren der Blatt-Pitch-Resonanzmodulation mit dem Pitch-Befehl, was einen kombinierten Pitch-Befehl ergibt; und

e) Verwenden des kombinierten Pitch-Befehls zur Steuerung des Pitches der Rotorblätter, um die Resonanzbewegung des Windturbinenturmes zu dämpfen, während die unerwünschte Bewegung unterdrückt wird.

**7.** Das Verfahren nach Anspruch 6, ferner aufweisend die Schritte:

Bereitstellen einer Blade-Pitch-Modulation zur Dämpfung der unerwünschten Bewegung unter Verwendung der Abschätzungen von unerwünschten Beschleunigungen; und

Kombinieren der Blatt-Pitch-Kommandos für unerwünschte Bewegung zur Bildung des kombinierten Pitch-Befehls.

**8.** Das Verfahren nach Anspruch 6, wobei in Schritt b) ein gedämpftes Modell zweiter Ordnung verwendet wird, um die resonanten Turmbeschleunigungen und unerwünschten Turmbeschleunigungen abzuschätzen.

## Revendications

**1.** Appareil qui amortit au moins une composante de fréquence de mouvement non souhaitée dans une tour de turbine d'éolienne, comprenant :

une logique de commande de pas développant un signal de commande de pas de pales de rotor ;

une logique d'amortissement de la tour utilisant des mesures d'accélération de la tour pour évaluer ladite au moins une composante de fréquence de mouvement en utilisant un estimateur basé sur un modèle ;

une sortie de ladite logique d'amortissement de la tour comprenant une modulation de pas collective sur la base de ladite au moins une estimation de composante ; et

une logique de combinaison raccordée à ladite logique d'amortissement de la tour et à ladite logique de commande de pas, une sortie de ladite logique de combinaison étant une commande de pas de pales combinée capable de commander le pas des pales de rotor, qui comprend l'amortissement de ladite au moins une composante de fréquence de mouvement de la tour de turbine d'éolienne.

**2.** Appareil selon la revendication 1, dans lequel ladite modulation de pas collective comprend un ou plus de mouvement résonant de la tour et de mouvement de fréquence non souhaité.

**3.** Appareil selon la revendication 1, dans lequel lesdites estimations de composante comprennent une ou plus d'estimations de mouvement résonant et d'estimations de mouvement de fréquence non souhaité.

**4.** Appareil selon la revendication 1, dans lequel ledit modèle est une réponse amortie de second ordre.

**5.** Appareil selon la revendication 1, dans lequel la logique d'amortissement décale en outre en phase la modulation de pas collective sur la base de ladite au moins une estimation de composante de fréquence.

**6.** Procédé d'utilisation de mesures d'accélération de la tour pour amortir le mouvement résonant de celle-ci, tout en supprimant également des signaux non souhaités dans les mesures, dans une tour de turbine d'éolienne qui utilise une commande de pas pour commander le pas des pales de rotor de ladite turbine d'éolienne, comprenant les étapes consistant à :

A. mesurer une accélération de la tour ;

B. estimer l'accélération résonante de la tour et l'accélération non souhaitée en utilisant les mesures d'accélération avec un estimateur basé sur un modèle ;

C. fournir une modulation résonante de pas de pale pour amortir un mouvement de la tour en utilisant lesdites estimations d'accélération résonante de la tour ;

D. combiner ladite modulation résonante de pas de pale avec ladite commande de pas, ce qui entraîne une commande de pas combinée ; et

E. utiliser ladite commande de pas combinée pour commander le pas des pales de rotor afin d'amortir ledit mouvement résonant de la tour de turbine d'éolienne tout en supprimant le mouvement non souhaité.

**7.** Procédé selon la revendication 6, comprenant en outre les étapes consistant à :

fournir une modulation non souhaitée de pas de pales pour amortir le mouvement non souhaité en utilisant lesdites estimations d'accélération non souhaitées ; et
combiner la commande non souhaitée de pas de pales pour former la commande de pas combinée.

**8.** Procédé selon la revendication 6, dans lequel, à l'étape B, un modèle amorti de second ordre est utilisé pour estimer les accélérations résonantes et non souhaitées de la tour.

# EP 2 115 299 B1

FIG. 1

greater wind speed

less wind speed

TOWER ACCELERATION 143

BLADE ROTATIONAL POSITIONS 140

WIND SPEED 136

BLADE MOMENT SIGNALS 147

BLADE PITCH SENSORS 141

GENERATOR RPM 138

ESTIMATOR LOGIC 146

CONVENTIONAL PITCH COMMAND LOGIC 148

ΔB1

ΔB2

ΔB3

COMMAND B1

COMMAND B2

COMMAND B3

FIG. 2

EP 2 115 299 B1

FIGURE 3

**FIGURE 4**

**FIGURE 5**

**FIGURE 6**

**Bode Diagram**

+30° phase
added at $\omega_{resonant}$

Frequency (Hz)

**FIGURE 7**

**FIGURE 8**

FIGURE 9

22

FIGURE 10

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4420692 A
- US 4435647 A

- US 6726439 B